# EUROPEAN PATENT APPLICATION

(11) **EP 1 855 000 A1**
(43) Date of publication of application: **14.11.2007**
(21) Application number: 06009882.9
(22) Date of filing: 12.05.2006
(51) Int. Cl.: F03D 11/00, E04B 1/98

(54) **Liquid sloshing damper**

(71) Applicant: SIEMENS AKTIENGESELLSCHAFT, 80333 München (DE)
(72) Inventor: Bay Enevoldsen, Peter, 7100 Vejle (DK); Hjort, Soeren, 7330 Brande (DK)

(57) **Abstract**

A liquid sloshing damper (1) is provided which includs at least one hollow body (3) with an internal space (15) and a liquid (17) contained in the internal space (15). A hollow bulge (10) extends outwards from a wall (7) of the hollow body (3), the hollow bulge (10) forming a bulge space which is part of the internal space (15).

## Description

The present invention relates to a liquid sloshing damper for a wind turbine.

Like other tall buildings and constructions wind turbines will be excited by the blowing wind in the full frequency spectrum of flexural modes. This means that the tower of the wind turbine will also be exited with a frequency corresponding to its natural bending frequency. This leads to natural frequency oscillations of the wind turbine tower. Several measures have been introduced in order to deal with the natural frequency oscillations of wind turbine towers.

A first measure is to put more mass into the tower, such that the first bending mode oscillation amplitudes are reduced and the first mode natural frequency is moved away from other natural and/or forced frequencies of the operating wind turbine.

A second measure is to actively control the tower oscillation by applying a tower load reduction strategy, e.g. on the blade pitch controller and/or, in case of a variable speed generator, the generator.

A third measure is to use a passive damper, either of mechanical or liquid type. The liquid type damper could be a u-shaped tube (column) or a so called liquid sloshing damper. In a liquid sloshing damper, a liquid filled into a hollow damper body sloshes when a damper fixed to a wind turbine tower moves together with the tower. In case of the liquid sloshing damper, this could either be a rectangular liquid sloshing damper, i.e. a unidirectional liquid sloshing damper which damps bending modes in a single bending direction, or a circular liquid sloshing damper, i.e. a bi-directional liquid sloshing damper. A rectangular sloshing damper and a u-shaped damper of the luquidtype are, e.g., described in WO 00/77394 A1.

P. Warnitschai and T. Pinkaew describe in "modelling of liquid sloshing in rectangular tanks with flow dampening devices", engineering structures, volume 20 no. 7, pages 593-600, 1998 rectangular liquid sloshing dampers which comprise flow dampening devices inside a hollow damper body. As dampening devices circular section poles, a flat plate and a wiremesh screen are described.

Enhancing the energy dissipation efficiency of a rectangular liquid sloshing damper through introduction of two-dimensional wedge shaped obstacles is described by V. J. Modi and A. Akinturk in "an efficient liquid sloshing damper for control of wind induced instabilities", Journal Of Wind Engineering and Industrial Aerodynamics, Volume 90, Pages 1907-1918, 2002.

It is an objective of the present invention to provide an alternative design for a liquid sloshing damper which improves the viscous dissipation in the damper liquid. It is a further object of the present invention to provide a wind turbine having an improved flexural mode damping characteristics.

These objects are solved by a liquid sloshing damper according to claim 1 and by a wind turbine according claim 10, respectively. The depending claims define further developments of the invention.

An inventive liquid sloshing damper includes at least one hollow body with an internal space and a liquid contained in the internal space. A hollow bulge extends outwards from a wall of the hollow body, the hollow bulge forming a bulge space which is part of the internal space. With the inventive liquid sloshing damper, an improvement of the damping efficiency is possible over state of the art liquid sloshing dampers, in particular for small amplitudes of tower oscillations. The sloshing wave dynamics is improved by the geometry of the liquid sloshing dampers hollow body, i.e. by the provision of the hollow bulge, without the necessity of flow dampening elements inside the hollow body.

The bulge may, e.g., be formed by a convex curvature, seen from the outside of the hollow body, at least in the central part of the first wall.

The hollow body may comprise a first wall having an outer part delimited by an outer edge, a second wall having an outer edge, the second wall being located opposite to the first wall, and an outer peripheral wall extending from the outer edge of the first wall to the outer edge of the second wall. The outer peripheral wall then connects the first wall to the second wall. The internal space is formed between the first wall, the second wall and the outer peripheral wall. The bulge extends outwards from the hollow body in at least a central part of the first wall.

The inventive liquid sloshing damper may be implemented as bi-directional sloshing damper by giving the outer edges of the first side and the second side circular shapes. The circular shapes would, in principle, allow also for dampening of torsional oscillations of the tower. In such a circular liquid sloshing damper the ratio of the arch height of a convex curvature of the first side to the diameter of the circle of the circular shape is advantageously in the range of 1 to 5 %, in particular in the range of 2 to 3 %.

If the second wall of the liquid sloshing damper has a shape which is inverse to the shape of the first side, when seen from the outside of the hollow body, a stable and space-saving stacking of hollow bodies is possible so as to allow to form a liquid sloshing damper with more than one hollow body. In other words, the liquid sloshing damper may comprise more than one of the hollow bodies which are stacked such that their bulges all show in the same direction.

In a special embodiment, the hollow body of the liquid sloshing damper further comprises an inner peripheral wall extending from an inner edge of the first wall located at a central part of the first wall to an inner edge of the second wall located at a central part of the second wall. The inner peripheral wall connects the first wall to the second wall, and the internal space is formed between the first wall, the second wall, the outer peripheral wall, and the inner peripheral wall. In this configuration, the inner peripheral wall forms a columnar obstacle which acts as a flow dampening device for the liquid inside the hollow body.

If the inner peripheral wall of each hollow body surrounds a central opening which extends from its first wall to its second wall, then the hollow bodies can be set on a rod such that it extends through the central openings. In particular, if the hollow bodies each comprise a second wall the shape of which is inverse to the shape of the first wall, as described above, a space saving stocking of a number of hollow bodies on a rod is possible.

An inventive wind turbine comprises at least one inventive liquid sloshing damper. With the inventive liquid sloshing damper, the wind turbine's tower is less vulnerable to natural frequency oscillations due to an improved dampening performance of the inventive liquid sloshing damper.

A liquid sloshing damper may, in general, be located at the tower top or in the nacelle of the wind turbine. The position at the tower top or the nacelle, respectively, is advantageous since the bending amplitude of the tower due to the oscillations is the highest in this location for first mode oscillations. However, in order to damp second mode oscillations of the tower, in which the highest amplitudes occur in the middle part of the tower, a liquid sloshing damper may be located at about half the tower height.

Further features, properties and advantages of the present invention will become clear from the following description of embodiments of the invention with reference of the accompanying drawings.

Figure 1 shows an embodiment of an inventive liquid sloshing damper in a top view.

Figure 2 shows the liquid sloshing damper of Figure 1 in a side view.

Figure 3 shows the liquid sloshing damper of Figure 2 in a sectional view.

Figure 4 shows an embodiment of an inventive liquid sloshing damper comprising five hollow bodies.

Figure 5 shows an alternative embodiment of the inventive liquid sloshing damper in a side view.

Figure 6 shows a further alternative embodiment of the inventive liquid sloshing damper in a side view.

Figure 7 shows a still further alternative embodiment of the liquid sloshing damper in a side view.

Figure 8 shows the damping efficiency of an inventive liquid sloshing damper compared to a state of the art liquid sloshing damper.

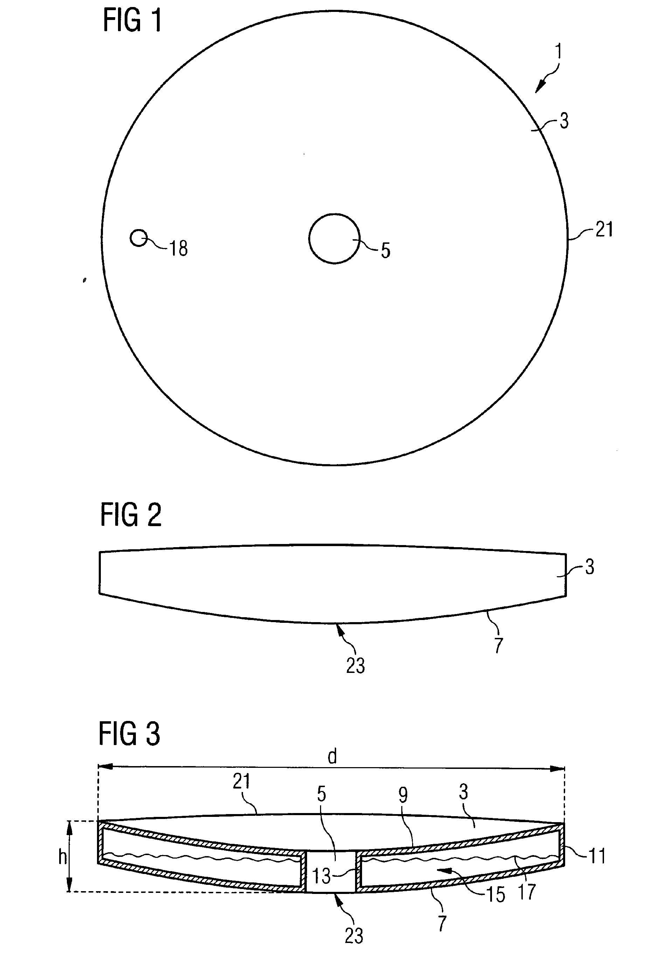

A first embodiment of the inventive liquid sloshing damper will be described with reference to Figures 1 to 3. While Figures 1 and 2 show the inventive sloshing damper in a top view and a side view, respectively, Figure 3 shows a sectional side view in order to show the internal construction of the liquid sloshing damper.

The liquid sloshing damper 1 of the first embodiment comprises a hollow body 3 with a circular base shape, as can be best seen in Figure 1. In the centre of the circular base, an opening 5 extends through the hollow body 3. An internal space 15 inside the liquid sloshing damper 3 is delimited by a bottom wall 7, a top wall 9, an outer peripheral wall 11 and an inner peripheral wall 13. A liquid 17 is disposed inside the internal space 15. The filling height of the liquid 17 is such that the internal space 15 is not fully filled with the liquid 17. This enables the liquid to slosh inside the internal space 15 upon a movement of the liquid sloshing damper 1. The filling height depends on the oscillations which are to be damped and may be varied through use of a filling opening 18 in the top wall 9.

The bottom wall 7 has a convex curvature which forms an outward bulge 10 of the hollow body. The biggest distance from a plane defined by the edge 21 where the top wall 9 and the outer peripheral wall 11 abut on each other is present in the convex curvatures central point 23. Although, in the present embodiment, the central point lies in the opening 5, it is also possible to design the liquid sloshing damper without opening so that the central point 23 is a real point of the bottom wall 7. The ratio of the arch height h of the convex curvature to the diameter of the liquid sloshing damper d is about 1 to 5 %, in particular 2 to 3 %.

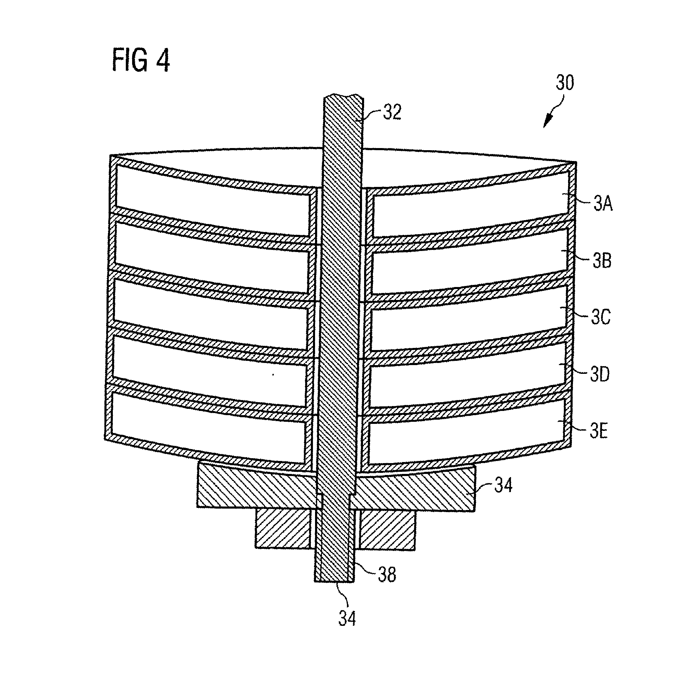

The top wall 9 of the hollow body 3 shows a concave curvature, as seen from the outside of the hollow body 3, which is inverse to the convex curvature of the bottom wall 7. This enables stable stackings of a number of hollow bodies 3 to form, as it is shown in Figure 4. However, a concave curvature of the top wall 9 does not necessarily need to be present, in particular if the liquid sloshing damper shall only comprise one hollow body 3.

A liquid sloshing damper 30 built up from 5 hollow bodies 3A to 3E is shown in Figure 4. Bodies 3A to 3E are stacked onto each other. Due to the inverse curvatures of hollow bodies top walls 9 with respect to their bottom walls 7, a stable and space-saving stacking is possible.

A rod 32 extends through the openings 5 of all hollow bodies 3A to 3E. The down most hollow body 3E is kept in place by a plate 34 the top side of which comprises a curvature which is adapted to the convex curvature of the hollow body's 3E bottom side 7. The bottom side of the plate 34 is plane. At the end 36 of the rod 32, an external thread 38 is present. A nut 40 is screwed onto this end 36 so as to fix the plate 34 to the bottom wall of the hollow body 3E. In a similar manner, a plate (not shown) is fixed to the top side of the top most hollow body 3A. By this measure, the five hollow bodies 3A to 3E are thoroughly secured to the rod 32. The rod 32, in turn, can be fixed to the nacelle of a wind turbine or to the tower top of a wind turbine in order to damp first mode natural frequency oscillations of the tower. Such first mode oscillations show the highest amplitude at the tower top. If second mode oscillations shall be damped, an inventive liquid sloshing damper can be fixed in the middle part of the tower, as the highest amplitudes of second mode oscillations are present in the middle of the tower.

The dampening effect of the liquid sloshing damper 1 lies in the liquid 17 filled into the internal space 15 of its hollow body 3. A movement of the hollow body 3 due to oscillations leads to a sloshing of the liquid 17. The sloshing dissipates energy of the oscillation, which in turn leads to a damping of the oscillation. If an opening 5 is present, the inner peripheral wall 13 of the hollow body 3 which surrounds the opening 5 forms a columnar flow dampening element which further increases the efficiency in dissipating energy.

The circular shape of the described liquid sloshing damper makes the liquid sloshing damper a bi-directional liquid sloshing damper, i.e. a sloshing damper which allows dampening of oscillations with amplitudes in different directions.

Such a bi-directional liquid sloshing damper not only allows for damping linear oscillations but also of torsional oscillations of the tower. However, if only a uni-directional damping is needed, the inventive liquid sloshing damper may have a more rectangular base shape.

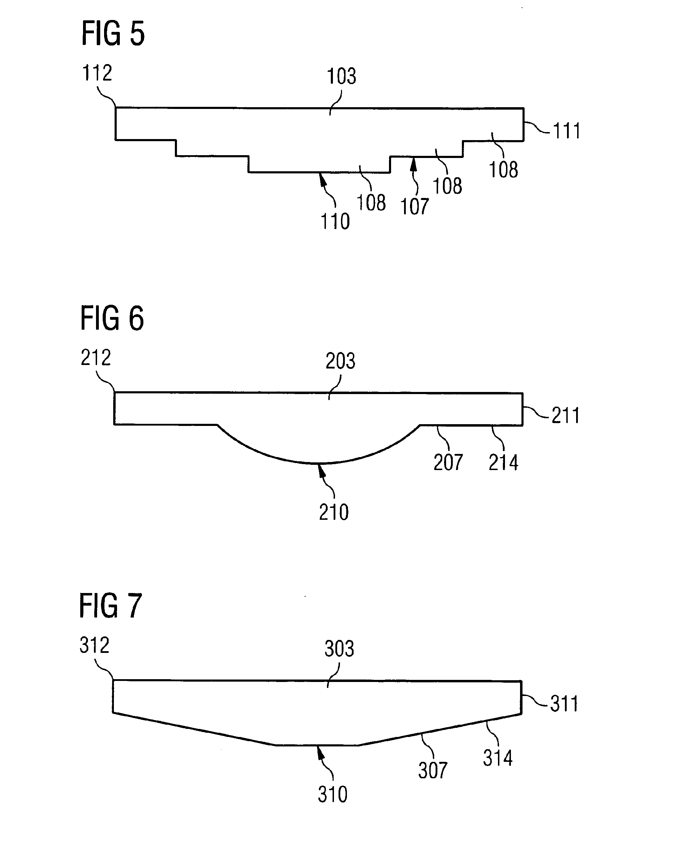

Further embodiments of hollow bodies for a liquid sloshing damper are shown in Figures 5, 6 and 7. The hollow bodies shown in this Figures may either form a liquid sloshing damper by itself or may be combined with further hollow bodies of the same type to form a liquid sloshing damper of the kind shown in Figure 4.

Figure 5 shows a hollow body 103 the base shape of which corresponds to the base shape of the first embodiment (i.e. to the base shape shown in Figure 1). The Figure shows a side view of the hollow body 103. In contrast to the first embodiment, the bottom wall 107 of the hollow body 103 does not have the convex curvature but is stepped. A number of steps 108 are arranged such that a central part 110 forms a bulge which is further away from a plane defined by the outer rim 112 of the hollow body 103, where the outer peripheral wall 111 abuts the top wall of the hollow body 103. The top wall may either be flat or may have an inverse stepping with respect to the bottom wall 107.

The embodiment shown in Figure 6 differs from the embodiment shown in Figure 1 in that the bottom wall 207 of the hollow body 203 comprises a central part 210 and a peripheral part 214 extending between the outer wall 211 and the central part 210. While the peripheral part 214 has a flat geometry, the central part 210 forms a bulge which shows a convex curvature, as seen from the outside of the hollow body 203. The point of the convex curvature which is furthest away from a plane defined by the outer rim 212 of the hollow body 203, where the outer peripheral wall 211 abuts the top wall, lies in the centre of the central part 210. Like in the other embodiments, the top wall may have an inverse shape with respect to the bottom wall 207.

The embodiment shown in Figure 7 differs from the embodiment described with respect to Figures 1 to 3 in that the bottom wall 307 does not have a convex curvature. Instead, a central part 310 of the bottom wall 307 is flat, and surrounded by a conically shaped peripheral part 314 of the bottom wall 307. A tapering of the conically shaped peripheral part is such that the central part 310 is further away from the plane defined by the rim 312 of the hollow body 303, where the outer peripheral wall 311 abuts the top wall of the hollow body 303. Thus, the central part 310 forms an outward bulge in the bottom wall 307. As in the other embodiments, the top wall of the hollow body 303 may have a shape which is inverse to the shape of the bottom wall 307 to allow for forming a stable and space-saving stack of hollow bodies 303.

Although in all embodiments, the geometrical shape of the bottom walls is different, all embodiments have in common that a bulge showing outwards from the hollow body is present in the central part of the bottom wall so that the central part is further away from a plane defined by the rim of the hollow body, where its outer peripheral wall abuts its top wall.

In all embodiments, the wall thickness of the bottom wall containing the bulge is substantially constant throughout the whole wall so that the shape of the bottom wall defines the shape of the lower side of the internal space, which may be referred to as a "bulge space".

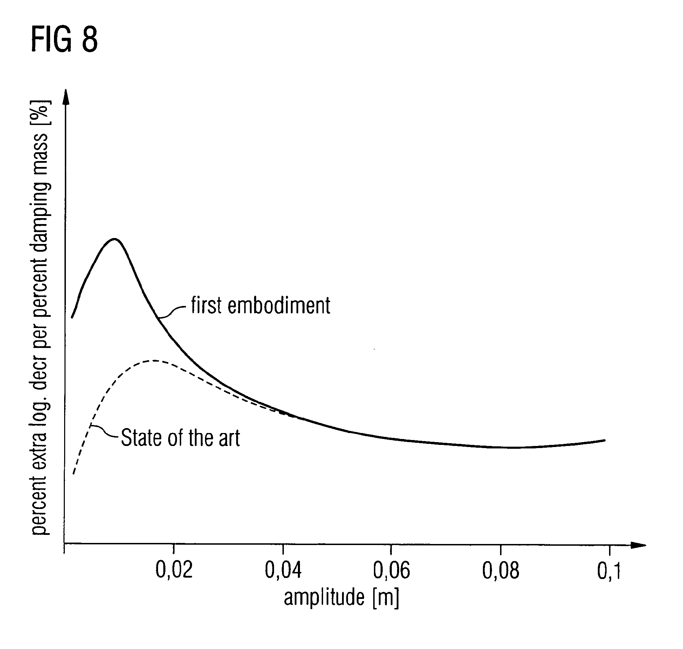

The shape of the inventive liquid sloshing damper, in particular the shape of its bottom wall, increases the damping efficiency, in particular at small oscillation amplitudes. Whereas for oscillation amplitudes which are larger than a about 0.04 m liquid sloshing dampers with and without the central bulge show almost the same damping efficiency the damping efficiency of liquid sloshing dampers with a central bulge increase with decreasing oscillation amplitudes. In particular, for oscillation amplitudes smaller than 0.02 m the damping efficiency can be substantially increased by such a bulge. Figure 8 shows a comparison of experimental results for the dampening with a liquid sloshing damper of the first embodiment and a liquid sloshing damper without central bulge.

## Claims

1. A liquid sloshing damper (1) including at least one hollow body (3, 103, 203, 303) with an internal space (15) and a liquid (17) contained in the internal space (15),
**characterised by**
a hollow bulge (10, 110, 210, 310) extending outwards from a wall (7, 107, 207, 307) of the hollow body (3, 103, 203, 303), the hollow bulge (10, 110, 210, 310) forming a bulge space which is part of the internal space (15).

2. The liquid sloshing damper (1) as claimed in claim 1, in which the bulge (10, 210) is formed by a convex curvature, as seen from the outside of the hollow body (3, 203), at least in central part of the wall (7, 207).

3. The liquid sloshing damper (1) as claimed in claim 1 or claim 2, **characterised by**
- a first wall (7, 107, 207, 307) having an outer edge;
- a second wall (9) having an outer edge, the second wall (9) being located opposite to the first wall (7, 107, 207, 307); and
- an outer peripheral wall (11, 111, 211, 311) extending from the outer edge of the first wall (7, 107, 207, 307) to the outer edge of the second wall (9) and connecting the first wall (7, 107, 207, 307) to the second wall (9);
- the internal space (15) being formed between the first wall (7, 107, 207, 307), the second wall (9) and the outer peripheral wall (11, 111, 211, 311); and
- the hollow bulge (10, 110, 210, 310) being formed in at least a central part of the first wall (7, 107, 207, 307).

4. The liquid sloshing damper (1) as claimed in claim 3, in which the second wall (9) has a shape which is inverse to the shape of the first wall (7).

5. The liquid sloshing damper (1) as claimed in claim 3 or 4, in which the outer edges of the first wall (7, 107, 207, 307) and the second wall (9) have circular shapes.

6. The liquid sloshing damper (1) as claimed in claim 2 and as claimed in claim 5, in which the ratio of the arch height of the convex curvature to the diameter of the circle of the circular shape is in the range of 1 to 5 %.

7. The liquid sloshing damper (1) as claimed in any of the claims 3 to 6, in which the hollow body (3) further comprises an inner peripheral wall (13) extending from an inner edge of the first wall (7) located at a central part of first wall (7) to an inner edge of the second wall (9) located at a central part of second wall (9) and connecting the first wall (7) to the second wall (9), the internal space (15) being formed between the first wall (7), the second wall (9), the outer peripheral wall (11), and the inner peripheral wall (13).

8. The liquid sloshing damper (1) as claimed in any of the claims 1 to 6, comprising more than one of said hollow bodies (3A-3E), the hollow bodies (3A-3E) being stacked such that their bulges (10) all show in the same direction.

9. The liquid sloshing damper (1) as claimed in claim 7 and claim 8, in which the inner peripheral wall (13) of each hollow body (3A-3E) surrounds a central opening (5) extending from the first wall (7) to its second wall (9), and in which the hollow bodies (3A-3E) are set on a rod (32) extending through their central openings (5).

10. A wind turbine comprising a liquid sloshing damper (1) as claimed in any of the preceding claims.

11. The wind turbine as claimed in claim 10, in which a liquid sloshing damper (1) is located at the tower top or in the nacelle.

12. The wind turbine as claimed in claim 9 or claim 10, in which a liquid sloshing damper (1) is located at half the tower height.

## Amended claims

### Amended claims in accordance with Rule 86(2) EPC.

**1.** A liquid sloshing damper (1) including at least one hollow body (3, 103, 203, 303) with an internal space (15) and a liquid (17) contained in the internal space (15),
**characterised by**
a hollow bulge (10, 110, 210, 310) extending outwards from a wall (7, 107, 207, 307) of the hollow body (3, 103, 203, 303), the hollow bulge (10, 110, 210, 310) forming a bulge space which is part of the internal space (15) where the liquid sloshing damper (1) comprises
- a first wall (7, 107, 207, 307) having an outer edge;
- a second wall (9) having an outer edge, the second wall (9) being located opposite to the first wall (7, 107, 207, 307); and
- an outer peripheral wall (11, 111, 211, 311) extending from the outer edge of the first wall (7, 107, 207, 307) to the outer edge of the second wall (9) and connecting the first wall (7, 107, 207, 307) to the second wall (9);
- the internal space (15) being formed between the first wall (7, 107, 207, 307), the second wall (9) and the outer peripheral wall (11, 111, 211, 311); and
- the hollow bulge (10, 110, 210, 310) being formed in at least a central part of the first wall (7, 107, 207, 307)
**characterised in that**
the outer edges of the first wall (7, 107, 207, 307) and the second wall (9) have circular shapes.

**2.** The liquid sloshing damper (1) as claimed in claim 1, in which the bulge (10, 210) is formed by a convex curvature, as seen from the outside of the hollow body (3, 203), at least in central part of the wall (7, 207).

**3.** The liquid sloshing damper (1) as claimed in claim 2, in which the ratio of the arch height of the convex curvature to the diameter of the circle of the circular shape is in the range of 1 to 5 %.

**4.** The liquid sloshing damper (1) as claimed in any of the claims 1 to 3, in which the hollow body (3) further comprises an inner peripheral wall (13) extending from an inner edge of the first wall (7) located at a central part of first wall (7) to an inner edge of the second wall (9) located at a central part of second wall (9) and connecting the first wall (7) to the second wall (9), the internal space (15) being formed between the first wall (7), the second wall (9), the outer peripheral wall (11), and the inner peripheral wall (13) .

**5.** The liquid sloshing damper (1) as claimed in any of the claims 1 to 4, comprising more than one of said hollow bodies (3A-3E), the hollow bodies (3A-3E) being stacked such that their bulges (10) all show in the same direction.

**6.** The liquid sloshing damper (1) as claimed in claim 4 and claim 5, in which the inner peripheral wall (13) of each hollow body (3A-3E) surrounds a central opening (5) extending from the first wall (7) to its second wall (9), and in which the hollow bodies (3A-3E) are set on a rod (32) extending through their central openings (5).

**7.** A wind turbine comprising a liquid sloshing damper (1) as claimed in any of the preceding claims.

**8.** The wind turbine as claimed in claim 7, in which a liquid sloshing damper (1) is located at the tower top or in the nacelle.

**9.** The wind turbine as claimed in claim 7 or claim 8, in which a liquid sloshing damper (1) is located at half the tower height.
